# EUROPEAN PATENT SPECIFICATION

(11) **EP 4 428 511 B1**
(45) Date of publication and mention of the grant of the patent: **06.08.2025**
(21) Application number: 23160673.2
(22) Date of filing: 08.03.2023
(51) Int. Cl.: G01M 3/00, G01M 3/20

(54) **HYDROGEN LEAK DETECTOR AND METHOD FOR DETECTING HYDROGEN LEAKS**
WASSERSTOFFLECKDETEKTOR UND VERFAHREN ZUR ERKENNUNG VON WASSERSTOFFLECKS
DÉTECTEUR DE FUITE D'HYDROGÈNE ET PROCÉDÉ DE DÉTECTION DE FUITES D'HYDROGÈNE

(43) Date of publication of application: 11.09.2024
(73) Proprietor: Inficon GmbH, 50968 Köln (DE)
(72) Inventor: ENQUIST, Frederik, 58102 Linköping (SE); HELLGREN, Johan, 58102 Linköping (SE)
(74) Representative: dompatent von Kreisler Selting Werner - Partnerschaft von Patent- und Rechtsanwälten mbB

(56) References cited:
- EP-A1- 3 933 403
- CN-A- 114 964 643

## Description

The invention relates to a hydrogen gas leak detector and to a method for detecting leaks in hydrogen gas conducting components, such as pipes or tanks.

One targeted application for the invention is leak detection on gas supply and distribution infrastructure. Hydrogen is widely regarded as an alternative fuel to fossil fuels and to natural gas, in particular. In the field of energy supply, a need exists for transferring from natural gas to hydrogen. In addition to creating infrastructure for the production and distribution of pure hydrogen, a focus lies on the gradual replacement of natural gas with hydrogen. There is therefore a need for a leak detector that can properly detect and measure hydrogen in all concentrations from ppm (or even lower) up to 100 vol. % even in the presence of other gases such as methane in mixed natural gas and hydrogen systems.

An increasing need therefore exists for detection of hydrogen within a gas sample comprising natural gas. For example, hydrogen is transported within natural gas pipelines where the natural gas is mixed with up to 20 vol. % hydrogen, because an amount of up to 20 vol. % hydrogen does not require any changes to appliances combusting the natural gas. Common conventional natural gas pipelines transport natural gas from the source of origin to the final consumer over long distances. Natural gas may typically consist of methane or mainly comprise methane in combination with further gas components. A common alternative to natural gas consisting of mainly methane is liquefied petroleum gas (LPG) consisting of propane or butane or a mixture of the two. Any reference to "natural gas" (NG) in the present disclosure indicates methane, a gas mixture mainly comprising methane, LPG, or a gas mixture comprising a combination of methane, ethane, propane and/or butane.

Natural gas and hydrogen are highly flammable. For safety reasons, it is important to be able to detect small leaks in hydrogen gas carrying components, such as natural gas pipelines carrying natural gas and hydrogen. The leak detection is to be carried out during regular leak surveys and during commissioning testing. Moreover, it is desired that the actual ratio of hydrogen within the hydrogen gas, e.g. natural gas, can be measured.

Most commonly, a detector for gas infrastructure is a sniffing detector, meaning a gas sample is collected by a sniffer probe or inlet and passed to a detector unit where it is analyzed. There are, however, also detectors where the gas transport to the detector works by diffusion. Another category not employing sniffing is so called open path optical detection where, instead of moving a gas sample, a light is passed through the sample and said light, after passing the sample, is analyzed for the loss of optical power at wavelengths interacting with the gas to be detected. An open path can be between a light source and a sensor or the path can be "half open" in the form of a cuvette with a slot along its axis through which gas can enter and leave the optical path by diffusion or convection. The slot is preferably covered with a filter material such as a gas permeable membrane to prevent dust and water to enter the pathway.

Sniffing leak detection is employed for detecting leaks in large, non-movable components. A vacuum pump is used to draw-in gas through a suction inlet of a sniffing probe. The sniffing probe is moved into the area to be tested, such as the outer surface of the test component. In the case of a buried gas pipeline, the sniffing probe is moved across the ground surface above the pipeline. The general concept is that the gas taken in by the sniffing probe is analyzed by a gas detector, in order to determine whether gas components from within the tested component is present in the measured gas.

Sniffing probes for leak detection in buried gas pipelines typically employ gas detectors that are able to detect the presence of natural gas components, such as methane, ethane, or propane. Becoming more affordable, the concept of infrared absorption is gaining popularity to detect natural gas components. Polar molecules like methane can absorb energy at specific wavelengths of infrared radiation related to their various vibrational modes. The intensity of light that has passed the gas sample is measured at one or several wavelengths, characteristic for the gas to be detected. This technology is known as NDIR (non-dispersive infrared absorption spectroscopy). Another, capable infrared absorption technology is tunable diode laser absorption spectroscopy (TDLAS) that can detect methane leaks from a distance. This technology is presently more costly but is gaining in popularity. However, as hydrogen is a non-polar molecule it cannot interact in this way with infrared radiation and neither NDIR nor TDLAS can, therefore, detect hydrogen gas. These types of sensors which don't react to hydrogen are therefore referred to as "non-sensitive" to hydrogen.

Sensors which react to hydrogen, i.e. which produce a measurement signal in reaction to hydrogen being present at or within the sensor, are called "hydrogen sensitive" sensors. Hydrogen sensitive sensors can generally be divided into two categories: "hydrogen selective" sensors and hydrogen "non-selective" sensors.

Sensors which are non-selective to hydrogen react to several different types of gases one of which is hydrogen, and where it is not possible to determine from the measurement signal whether the measurement signal was triggered by hydrogen or by one of the other gases. Hydrogen selective sensors, on the other hand, generate a measurement signal which permits to clearly determine if the signal was triggered by hydrogen and not by any other gas. In the present context, a sensor is called selective to hydrogen if it is more than 100 times more sensitive to hydrogen than to other gases which are typically present in the surroundings of hydrogen gas conducting components where hydrogen leaks are to be detected.

Common technologies for detecting hydrogen that are applicable in portable hydrogen gas detectors are listed below:

| **Technology** | **Mechanism** | **Advantage** | **Limitation** |
|---|---|---|---|
| TC | Thermal Conductivity | Not prone to poisoning or overexposure damage. | Not ppm capable. |
| | | | Not hydrogen selective |
| Pellistor | Resistance changes due to temperature raise from catalytic combustion. | Simple Good for LEL range | Not ppm capable |
| | | | Prone to poisoning. |
| | | | Memory effects. |
| | | | Damaged by high exposures. |
| | | | Not hydrogen selective. |
| | | | Requires oxygen in gas. |
| MOS | Metal Oxide Semiconductor material such as SnO2 change its conductivity when exposed to reducing gas. | PPM capability | Non-linear. |
| | | | Prone to poisoning. |
| | | | Memory effects. |
| | | | Saturates at high concentrations. |
| | | | Damaged by high exposures. Not hydrogen selective. |
| | | | Requires oxygen in gas. |
| EC | Electrochemical | Linear | Slow. |
| | | | Limited life - consumed by hydrogen exposure. |
| MH-Semi | Metal Hydride electrode on Semiconductor that changes work function with concentration of absorbed hydrogen. | Highly hydrogen selective. Sub ppm capability | Non-linear. |
| | | | Relative measurement only. |
| | | | Saturates at high concentrations. |
| MH-resistor | Metal-Hydride resistor changes resistance with concentration of absorbed hydrogen | Less saturation than MH-Semi | Not ppm capable. |
| | | | Saturation at high concentrations |
| SoS | Speed of Sound | Not prone to poisoning or overexposure damage | Not ppm capable. |
| | | | Not hydrogen selective |

The Speed of Sound and Thermal Conductivity technologies have some common major benefits. They are both insensitive to poisoning from other gases, high exposure tolerant and show very low drift over time as no chemical reactions are involved. A challenge with both sensor technologies is in selectivity. Several other common gases give considerable response on both. These sensors are therefore referred to in the present disclosure as hydrogen sensitive, but non-selective to hydrogen.

While, on these two sensors, hydrogen gives the strongest response of all commonly occurring gases it is still necessary to compensate for the influence of other gases to get the correct hydrogen values. This is particularly the case in mixed natural gas and hydrogen systems with lower hydrogen content as currently under development.

A speed of sound (SoS) sensor excites gas in a measurement volume by an acoustic signal and then either measures the time for the acoustic signal to travel a certain distance before being detected by a microphone, or determines the acoustic resonance frequency in the measurement volume. Such SoS sensors are described, for example, in WO 2013/078308 A1 and in US 5,768,937 A.

When designing a gas detector capable of measuring high gas concentrations of hydrogen, there are certain drawbacks depending on the employed sensor type that must be considered. Sensors which are hydrogen sensitive, but non-selective to hydrogen, such as speed of sound sensors or thermal conductivity sensors, are capable of detecting high concentrations of hydrogen, but are non-selective to hydrogen as they typically also react to other gases which affect the signal quality, particularly for low concentrations of hydrogen. For example, carbon dioxide (CO2) generates a negative speed of sound signal while hydrogen (H2) generates a positive speed of sound signal, which would decrease the resulting measurement signal of hydrogen in air or CO2. Methane (CH4) and water vapor (H2O) generate a positive speed of sound signal which would increase the resulting measurement signal of hydrogen mixed with CH4 or water vapor.

The advantages and limitations of each of the currently available hydrogen sensor technologies therefore makes no one single technology applicable in the full range of hydrogen concentrations from a few parts per million (ppm) to 100 Vol. % hydrogen in a non-laboratory application.

EP 3 933 403 A1 discloses a natural gas and hydrogen detector for detecting hydrogen in mixtures of hydrogen and natural gas. The disclosed detector utilizes NDIR sensor technology for detecting natural gas and a second sensor for detecting flammable gas in general. If the general sensor detects flammable gas while the NDIR sensor does not detect significantly lower amounts of hydrocarbons, this is taken as evidence for presence of hydrogen. Both these technologies have selectivity limitations. "Selective" in this context meaning being more than 100 times more sensitive to hydrogen than to other gases typically occurring in the typical application of detecting leaks in hydrogen gas conducting components.

A flammable gas sensor such as a TC or SoS sensor, reacts to other gases which can give positive and/or negative contributions to the measurement signal. Among the most disturbing gases in the context of gas pipelines are methane, water and carbon dioxide that are all present in considerable and varying concentrations in the ground soil and above the surface in that application.

The table below illustrates the complexity of compensating the hydrogen signal for influence from the disturbing gases that are commonly present in the application of leak detection on underground hydrogen gas conducting components.

*** High concentrations in LPG. Typically, below 1% in NG.**

| Gas | Encountered concentration | Speed of sound 20°C / 1 atm [m/s] | Speed of sound in air with 1% added [m/s] | Change when 1% is added to air [m/s] |
|---|---|---|---|---|
| Hydrogen | 0-100% | 1303.5 | 345.03 | +1.61 |
| Carbon Dioxide | 0.04-15% | 267.91 | 342.35 | -1.06 |
| Water | 0.5-10% | - | 343.96 | +0.54 |
| Methane | 0-100% | 445.71 | 344.04 | +0.62 |
| Ethane | 0-15% | 311.38 | 342.84 | -0.57 |
| Propane | 0-100% * | 250.83 | 341.61 | -1.81 |
| n-Butane | 0-65% * | 215.44 | 341.7 | -1.72 |

Drift in the zero-hydrogen signal of SoS and TC sensors due to changes in temperature, carbon dioxide, and methane content further limits the application of these technologies at lower concentrations. This selectivity issue is further complicated by the fact that the mixing ratio of hydrogen and natural gas in the pipe or system under investigation is seldom known. Compensation becomes increasingly more difficult as hydrogen to natural gas ratio decreases.

The most difficult application is likely when sampling gas escapes from the ground during a leak survey. The humidity and concentrations of carbon dioxide and even methane can change dramatically as the detector is moved over the ground surface. This makes it necessary to allow a continuous or intermittent zeroing of the detector to allow a stable and correct measurement at all ranges of a speed of sound or thermal conductivity sensor used for the higher range. In the present context, "zeroing" means calibrating the sensor for very low concentrations of hydrogen or for almost no hydrogen at all, when only the natural amount of hydrogen content in surrounding air is present.

In addition to zeroing, it is also required that the influence from the mentioned disturbing gases is compensated for when calculating a non-zero hydrogen compensation in the higher range measured by a H2 sensitive but non-selective sensor, such as a TC or SoS sensor.

It is therefore an object of the invention to provide a hydrogen leak detector and a method for detecting leaks in hydrogen gas and in hydrogen and natural gas mixture conducting components, particularly in an outdoor or otherwise not well defined ambient.

The leak detector of the invention is defined by independent claim 1. The method of the invention is defined by independent claim 11.

Accordingly, a hydrogen gas leak detector is provided, which is adapted to measure the concentration of hydrogen gas in gas sampled in the vicinity of a gas conducting component.

In the context of the present disclosure, the term "hydrogen gas" refers to a gas comprising 100 volume percent (vol. %) or close to 100 vol. % of hydrogen, such as at least 80 Vol. % hydrogen, and can also mean a mixture of hydrogen and other gases.

The hydrogen gas leak detector of the invention comprises a hydrogen gas detector adapted to measure the concentration of hydrogen gas conveyed through a gas conduction path. Said hydrogen gas detector comprises
a first gas sensor being hydrogen selective and adapted to react to a first range of relatively low hydrogen concentrations below a first threshold, and
a second gas sensor being hydrogen sensitive and non-selective to hydrogen, and sensitive to at least one further secondary gas different from hydrogen, and being adapted to react to a second range of relatively higher hydrogen concentrations above the first threshold.

The hydrogen leak detector of the invention is adapted to calibrate the second gas sensor for low concentrations of hydrogen being present in the ambient atmosphere of the hydrogen gas detector and which do not originate from a leak in a hydrogen gas conducting component under test. The calibration is carried out by measuring the hydrogen concentration in a measured gas taken from the ambient atmosphere with the first gas sensor and with the second gas sensor, and by assigning the measurement signal of the second gas sensor of said measured gas to correspond to a concentration which does not result from a hydrogen leak, if the measurement signal of the first sensor of said measured gas indicates a hydrogen concentration below a predetermined value.

In other words, a gas sample is taken from the ambient atmosphere, and is measured by both the first and second gas sensors. If the first gas sensor indicates a hydrogen concentration in the measured sample below a predetermined value, the respective measurement signal of the second gas sensor of the same measured gas is considered as corresponding to a concentration of hydrogen which does not originate from a leak in a hydrogen gas conducting component under test. Said measurement signal of the second gas sensor is therefore assigned to correspond to a concentration which does not result from a hydrogen leak. In an embodiment, said measurement signal of the second gas sensor is assigned to correspond to a concentration of zero volume percent of hydrogen.

The expression "assigning the measurement signal of the second gas sensor to correspond to a concentration of" could mean, for example, that a computing device or microprocessor comprises a memory, in which the result of the assigning is stored. The computing device or microprocessor employs the second gas sensor's measurement signal in the calibration process and stores this signal or corresponding signal value in the memory as a signal or signal value which does not originate from a hydrogen leak in a hydrogen gas conducting component under a subsequent test. In addition, or as an alternative, such measurement signal or signal value of the second gas sensor could be stored as zero volume percent of hydrogen or as corresponding to zero volume percent of hydrogen.

If, in a subsequent leak test of a hydrogen gas conducting component tested with the hydrogen leak detector of the invention, the second gas sensor measures a signal or signal value corresponding to the previously measured signal or signal value below a predetermined value during the calibration process, the hydrogen leak detector of the invention compares the measurement value of the leak test with the previously stored measurement value of the calibration process. If these two correspond to each other within a predetermined range, the hydrogen leak detector indicates that this measurement signal of the hydrogen gas conducting component under test does not originate from a leak, and/or corresponds to zero volume percent of hydrogen, as a result from the previous calibration process.

On the other hand, if the first gas sensor indicates a hydrogen concentration in the measured sample above a predetermined value, the hydrogen leak detector may consider a hydrogen leak as being present in a hydrogen gas conducting component under test if the second gas sensor indicates a hydrogen gas concentration above a second threshold, where the second threshold may be the same as the predetermined value of the calibration process. This step of considering a hydrogen leak as being present can also be carried out by the above-mentioned computing device or microprocessor. For example, in an embodiment, the measurement signal or signal value taken by the second gas sensor during testing of a hydrogen gas conducting component is compared by the computing device or microprocessor with signal values stored in the memory, at least one of which is the above-mentioned signal value of the calibration process which has been assigned as not corresponding to a concentration originating from a hydrogen leak, and/or as corresponding to a concentration of zero volume percent of hydrogen.

In addition, a hydrogen leak may be considered as present in a hydrogen gas conducting component under test if the first gas sensor indicates a hydrogen concentration above a third threshold, where said third threshold is below said second threshold. This step of considering a hydrogen leak as being present can also be carried out by the above-mentioned computing device or microprocessor. Thereby, the range of concentrations to which the hydrogen leak detector reacts is increased, because the different ranges of hydrogen concentrations to which the two sensors react are both employed in leak detection.

According to the invention, a hydrogen leak is considered to be present in the tested hydrogen gas conducting component, if the selective hydrogen gas sensor indicates a hydrogen concentration beyond a predetermined threshold. For example, the measurement is initiated by a measurement with the hydrogen selective gas sensor. If the hydrogen selective gas sensor indicates a notable hydrogen gas concentration, which might result from a leak in the component under test, or if the measurement result of the hydrogen selective gas sensor indicates that the hydrogen selective sensor is saturated, this is considered as an indication that the component under test might comprise a hydrogen leak. Consequently, the second gas sensor is employed for a further gas analysis, in order to quantify the hydrogen concentration if this is above the useable range of the hydrogen selective gas sensor. In this regard, the second gas sensor may be adapted to measure the speed of sound of a sound signal transmitted through gas taken-in through the gas inlet. The speed of sound in a gas mixture is affected by several criteria, among which is the type of gas components present in the gas mixture. For example, the speed of sound within air is lower than the speed of sound within a gas mixture of air and a specific amount of hydrogen gas at the same temperature.

In an embodiment suitable for non-mixed hydrogen conducting components, the hydrogen gas detector comprises a hydrogen selective gas sensor adapted to measure a range of relatively low hydrogen concentrations and a speed of sound (SoS) gas sensor adapted to measure relatively higher hydrogen. The SoS gas sensor is adapted to measure the speed of sound within the measured gas, in order to determine the hydrogen concentration from the measured speed of sound in a higher concentration range. In the present context, "relatively low" means lower than the hydrogen concentrations measured by the speed of sound gas sensor, while "relatively high" means that the hydrogen concentrations measured by the speed of sound gas sensor are higher than the hydrogen concentrations measured by the hydrogen selective gas sensor.

Accordingly, while a range of comparably low hydrogen concentrations is covered by measurement with the hydrogen selective gas sensor, a range of comparatively higher hydrogen concentrations is covered by measuring the speed of sound with the SoS gas sensor.

Varying humidity and CO₂ content is known to be handled by filters capturing the water and carbon dioxide. Such filter solutions are, however, not suitable for portable equipment for continuous or daily use due the limited capacity of filters that are small and light enough to carry. Small selective filters, not being large enough to remove all of the disturbing gas can, however, be used in a gas modulation mode where the signal is analyzed at the modulation frequency or over tones thereof. The smaller filter can then slow down the change in concentration of the disturbing gas and algorithms can filter the signal to reject the change caused by variation in concentration of the disturbing gas. This is particularly possible for hydrogen and methane detection as these small molecules will pass most surface-active filters with insignificant delay. This principle is described in EP 3 163 299 A. Methane influence of the SoS or TC signal can accordingly not be handled by such selective filtering.

According to the invention, the first hydrogen selective gas sensor is used to perform a zero adjustment or calibration of the second, non-selective gas sensor by measuring the hydrogen concentration in the atmosphere surrounding the hydrogen gas conducting component, preferably when no leak is present or when only a relative low hydrogen concentration is present, which does not appear to originate from a leak in the hydrogen gas conducting component under test. The zero adjustment is used to adapt the base line in the measurement signal of the second, non-selective gas sensor to the current level of disturbing gases in the surrounding atmosphere. The measurement signal taken by the hydrogen selective gas sensor during the zero compensation is employed as a reference signal for a gas, which does not contain a notable hydrogen concentration, but rather only an insignificant concentration, which is assumed not to originate from a leak in the component under test.

In order to achieve this, the hydrogen leak detector of the invention may comprise a computing device, such as a microprocessor, having a memory in which measured signal values can be stored. During the zero compensation, which is also referred to as "calibration process" in the present disclosure, measurement signals are taken by both the first and second gas sensors from a gas taken from the surrounding atmosphere when no leak in a hydrogen gas conducting component under test is present. The computing device evaluates the measurement signal from the first gas sensor and compares the signal values to a predetermined value. If a signal value from the first gas sensor is below a predetermined value, a respective signal value taken at the same time by the second gas sensor is stored in the memory as a signal value which corresponds to a hydrogen concentration which does not originate from a possible leak in a component under test. This is presently also referred to as assigning the measurement signal of the second gas sensor of said measured gas to correspond to a concentration which does not result from a leak in a hydrogen gas conducting component under test.

If, in a later leak test of a hydrogen gas component, the second gas sensor takes a measurement signal value which corresponds to said stored signal value within a predetermined range of deviation, it is considered that said measurement value does not originate from a leak in the component under test. The computing device of the hydrogen leak detector of the invention compares the measurement values taken by the second sensor during a leak test with those stored in the memory during a previous calibration process. If a measurement value during a leak test corresponds or is below a value which has been stored as not corresponding to a concentration originating from a leak in a tested component, the computing device generates a signal to inform the operating person that this value does not originate from a leak, or that a leak is not present. If, on the other hand, a signal value taken during a leak test is above a second threshold, such as above said predetermined value of the calibration process, said computing device generates a signal informing the operator that a leak is present in the tested component, or that the measurement signal corresponds to a concentration which originates from a leak in the component under test.

The first gas sensor is therefore used to calibrate or to zero compensate the second gas sensor, while the second gas sensor is used for an actual leak test of a hydrogen gas conducting component, in order to be able to employ the second gas sensor in an increased range of hydrogen concentrations. This increased range of hydrogen concentrations is particularly larger than the range of concentrations in which a hydrogen sensitive gas senor which is non-selective to hydrogen would typically be sensitive to hydrogen leakage gas leaking from a component under test.

The invention therefore achieves to provide a hydrogen leak detector employing a hydrogen sensitive gas sensor being non-selective to hydrogen in an increased range of concentrations for hydrogen leak detection.

The second gas sensor may be a speed of sound sensor, such as described in US 2013/0125622 A1, or a thermal conductivity sensor. These types of sensors are less affected by damage or poisoning from overexposure of the sensor. Thereby, the second gas sensor can be used to measure hydrogen gas concentrations which result in saturation of the first gas sensor.

As described above, the interfering gases carbon dioxide (CO2) and methane (CH4), commonly present in high concentrations, severely interfere with the measurement signal from the second gas sensor, particularly in the case of an SoS or TC gas sensor.

In the context of the invention, it is therefore desirable to measure the concentration of these gases to compensate the second gas sensor's measurement signal to achieve an accurate quantification of the hydrogen concentration.

The influence of water in the form of vapor (humidity) is expected to be less pronounced as it is expected to vary less and seldom be present in concentrations above 10 vol. %. Optimally, the water concentration can also be measured for a further improvement of the accuracy of the hydrogen estimation.

In an embodiment, in which the second gas sensor is an NDIR sensor, methane, carbon dioxide and water can all be measured with an NDIR sensor to provide data for compensating the signal of the first gas sensor, which may be an SoS or TC sensor. In such an embodiment, methane, carbon dioxide and water are secondary gases to which the second gas sensor is sensitive.

Measured speed of sound can be used to determine the amount of hydrogen gas present in the tested gas mixture. In an embodiment in which the second gas sensor is a speed of sound sensor, a first approximation of the hydrogen concentration can be calculated by assuming that the speed of sound measured at the most recent zeroing represents the speed in the ambient gas and the change in speed emanates from the addition of hydrogen only.

A second and more accurate approximation can be made assuming that the ambient gas consists of air, methane and carbon dioxide and the concentration of the latter two are measured at the same time as the hydrogen content which is to be calculated. There is then only one unknown, the hydrogen concentration as the air concentration is the reminder after subtracting the unknown H2 and the measured CH4 and CO2 concentrations.

An even more accurate approximation can be made by also measuring the water concentration or concentration of water vapor, which is presently considered as a secondary gas to which the second gas sensor is sensitive. In all case the speed of sound in air is estimated from the last zero-point measurement compensated for the concentration of the disturbing gases at that particular moment.

The temperature of the gas should preferably also be included in all calculations.

In addition, or as an alternative, the measured speed of sound may be compared with reference values taken from reference measurements of gas mixtures with specific hydrogen concentrations, possibly at different temperatures.

The first, hydrogen selective gas sensor may be a metal hydride (MH-)Semi sensor implemented as a Field Effect Transistor (FET) or a Shottky diode or any other kind of hydrogen sensor which is at least 100 times more sensitive to hydrogen than to CO2, CH4 and water vapor.

The second gas sensor may be an SoS sensor comprising a measurement cuvette which can be filled with the gas to be measured, a sound source adapted to emit sound signals into the gas within the cuvette, and at least one microphone adapted to receive the sound signals transmitted from the sound source through the cuvette.

The hydrogen concentration may be calculated from the measured speed of sound, particularly if the concentrations of all gas components except one, as well as the bulk concentration are known. For example, in a gas mixture of hydrogen, air and methane (CH4), the concentrations of air and CH4 need to be known, in order to calculate the concentration of hydrogen gas (H2).

Other types of sensors may additionally be employed, in order to determine the presence and/or concentration of other gas components in the gas mixture under test.

The speed of sound measurement may be improved by employing at least two microphones at a known distance, where the speed of sound is calculated based on the time difference between receipt of the sound signals by the two microphones, and based on the distance between the two microphones.

As an alternative or in addition, the speed of sound may be calculated by use of the resonance frequency f, which is the speed of sound c divided by the wavelength λ where resonance occurs. The speed of sound may thus be calculated if the resonance wavelength λ and the resonance frequency f are known.

When employing two microphones for the speed of sound measurement, the two microphones are located at different locations in a tube-like arrangement, which may also be referred to as the measurement cuvette. The sound signal generated by the speaker (sound source or sound emitter) travels inside the tube to the first microphone and then to the second microphone located further away from the speaker. The microphone signals are then used to calculate the time it takes the sound signal to travel the distance between the two microphones. The speed of sound is then calculated by dividing the distance between the two microphone positions by the time it took the sound signal to travel this distance.

In a preferable embodiment of the invention, the hydrogen gas detector is combined with a third gas sensor adapted to measure the concentration of natural gas or natural gas components in the gas mixture guided through the gas conduction path. For example, the third gas sensor may comprise a radiation absorption cuvette, which can be filled with the gas to be measured. A radiation source is provided to emit radiation of a known frequency band into the gas within the cuvette, and a radiation detector is provided to detect the radiation transmitted through the cuvette, in order to determine the absorption band of the detected radiation. For example, the radiation absorption detector can be an infrared absorption detector, such as a non-dispersive infrared radiation (NDIR) analyzer. This concept is particularly advantageous for detecting hydrocarbons in a gas mixture.

The third gas sensor may be an NDIR sensor, particularly a wide range CH4 NDIR sensor such as described in WO 2017/121688 A1.

When combining a third gas sensor as described above with a hydrogen gas detector of the above-described type, hydrogen concentrations within natural gas may be detected, and/or the third gas sensor may be employed to determine whether a measured speed of sound, which deviates from that within air, is caused by hydrogen or by a natural gas component.

The third gas sensor is adapted to measure gas guided through the gas conduction path, and is non-sensitive to hydrogen, but sensitive to said at least one secondary gas to which the second gas sensor is sensitive. The third gas sensor can be equipped to analyze the measurement signal, such as the absorption at additional wavelength ranges in the case of an NDIR sensor, to measure the concentration of other gases (secondary gases) affecting the measurement signal of the second gas sensor, such as the speed of sound in the sample in case of an SoS sensor. Such gases may be, for example, carbon dioxide and water. This information can be used to further improve the accuracy and selectivity of the detector in the range covered by the second gas sensor.

The third gas sensor may also be used to interpret the measurement signal of the first gas sensor, by assessing whether the measurement signal of the first gas sensor was produced by hydrogen or by one or more secondary gases to which the first gas sensor is also sensitive.

The hydrogen leak detector may be a portable and/or sniffing leak detector which may be employed when leaks are to be detected in natural gas pipelines, which carry a certain amount of hydrogen gas.

In the following, embodiments of the invention are described with reference to the Figures in which
- Fig. 1: shows a general layout of a first embodiment,
- Fig. 2: shows a general layout of a second embodiment,
- Fig. 3: a detail of the embodiment of Fig. 2,
- Fig. 4: a detail of a further embodiment, and
- Fig. 5: a general layout of another embodiment.

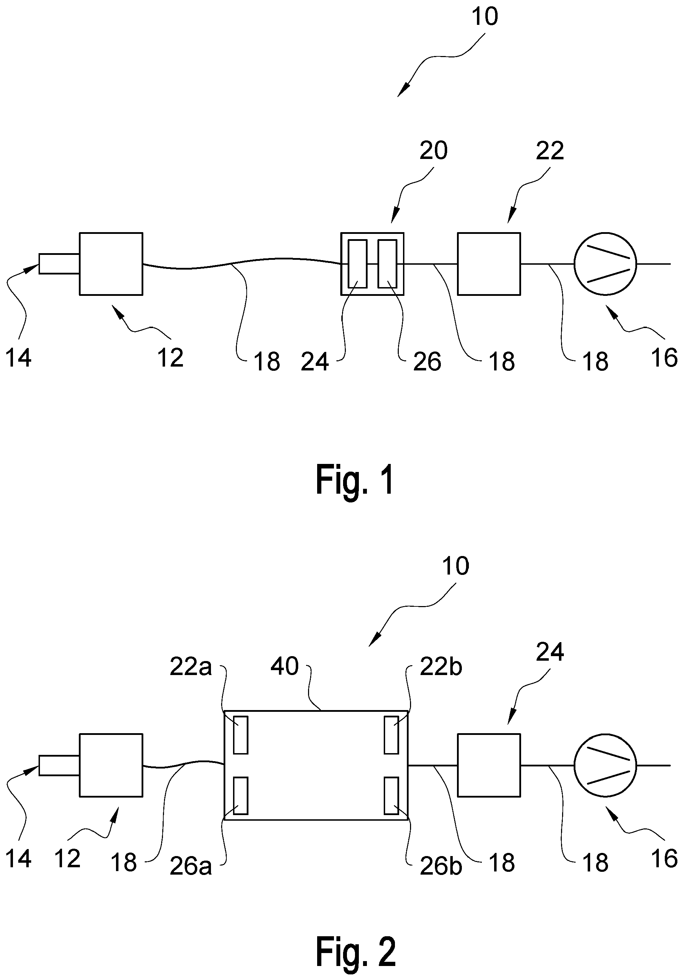

Fig. 1 shows a hydrogen leak detector 10 in the form of a sniffing leak detector with a sniffing probe 12 having a sniffing inlet 14. The sniffing probe 12 is connected to a vacuum pump 16 via a gas conduction path 18, which comprises a hydrogen gas detector 20. The hydrogen gas detector 20 comprises a first gas sensor 24, a second gas sensor 26 and a third gas sensor 22.

The hydrogen gas detector 20 comprises a first, hydrogen selective gas sensor 24 in the form of a MH (metal hydride)-semi field effect (FET) gas sensor, as well as a second gas sensor 26 in the form of a speed of sound (SoS) gas sensor. The gas guided through the gas conduction path 18 passes both the first, hydrogen selective gas sensor 24 and the second, SoS gas sensor 26. The gas conduction path 18 further comprises a third, natural gas sensor 22 in the form of a non-dispersive infrared (NDIR) analyzer.

What is not shown in Fig. 1 is that the second gas sensor 26 comprises a measurement cuvette having a gas inlet connected to the gas conduction path 18, in order to be filled with the gas guided through the gas conduction path 18. Moreover, a sound emitter in the form of a loudspeaker and two microphones are positioned along the measurement cuvette, such that a sound signal emitted by the sound emitter travels through the gas-filled measurement cuvette before it reaches the first microphone and travels on to reach the second microphone. Both microphones therefore capture the sound signal at two different times. The speed of sound in the cuvette is calculated from the distance between the two microphones and the time difference between capturing the sound signal by the first microphone and capturing the sound signal by the second microphone.

The third gas sensor 22 comprises an absorption cuvette, which is also not shown in Fig. 1. The absorption cuvette of the third gas sensor 22 (natural gas sensor) and the measurement cuvette of the second gas sensor 26 (speed of sound gas sensor) can advantageously be the same. This is shown in the embodiments according to Figs. 2-4, for example. For simplification purposes, Fig. 1 shows the third gas sensor 22 and the second gas sensor 26 as two separate components.

The absorption cuvette of the third gas sensor 22 therefore also comprises a gas inlet connected to an infrared (IR) sensor, and an infrared emitter 26a and an infrared detector 26b at two opposing sides of the cuvette, such that the infrared light emitted by the IR emitter travels through the cuvette and the gas contained therein before it is analyzed by the infrared detector 26b. The analysis is carried out in a generally known manner according to the absorption principle. The loss of light intensity due to absorption is analyzed in one or several wavelength ranges in which the natural gas is known to absorb light.

The measurement of the natural gas concentration and the methane concentration, in particular, is required for correct measurement of the hydrogen concentration in a sample with significant methane concentrations, "significant" meaning more than 5 vol. % of the actual hydrogen concentration in the sample.

The third, IR sensor 26 can be equipped to analyze the absorption at additional wavelength ranges to measure the concentration of other gases affecting the speed of sound in the sample. Such gases are for example, carbon dioxide and water. This information can be used to further improve the accuracy and selectivity of the detector in the range covered by the second, SoS sensor 26.

Figs. 2, 3 and 4 each show embodiments, in which the second gas sensor 26 and the third gas sensor 22 share the same measurement cuvette 40.

In the embodiment of Fig. 2, the hydrogen leak detector 10 is also a sniffing leak detector as that according to Fig. 1, comprising a sniffing probe 12 with a gas inlet 14, a gas conduction path 18 connecting the gas inlet 14 to a vacuum pump 16, which discharges, for example, to atmosphere. The difference of the embodiment according to Fig. 2 to that of Fig. 1 is the arrangement of the first gas sensor 24, the second gas sensor 26 and the third gas sensor 22. In Fig. 2, the second gas sensor 26 is a speed of sound sensor which employs the same measurement cuvette 40 as the third gas sensor 22, being a non-dispersive infrared (NDIR) sensor. The third sensor 26 comprises a sound source, such as a directional loudspeaker 26a on one end of the cuvette 40, and a microphone 26b on an opposite end of a cuvette 40. As a result, a sound signal emitted by the sound source 26a travels through the cuvette 40 and gas contained therein before being received by the microphone 26b. In a similar manner, the third gas sensor 22 comprises an infrared source 22a on one end of the cuvette 40, and an infrared sensor 22b on an opposite end of the cuvette 40. Accordingly, an infrared signal emitted by the IR source 22a travels through the cuvette 40 and gas contained therein, before being received by the infrared sensor 22b. The signal analysis of the measurement signals generated by the three gas sensors 22, 24, 26, and in particular by the infrared sensor 22b and the microphone 26b is carried out by a computing device, such as a microprocessor or computer, not shown in the Figures for simplification purposes. The computer or computing device is electronically connected to at least all gas sensors 22, 24, 26 of the hydrogen gas detector 20.

In the embodiment of Fig. 2, the first gas sensor 24 is arranged in the gas conduction path 18 between the measurement cuvette 40 and the vacuum pump 16.

As an alternative, the first gas sensor 24 can be arranged in the gas conduction path 18 between the sniffing probe 12 and the cuvette 40.

As a further alternative, in an additional embodiment, the gas sensors 24, 26, 22 may be arranged in parallel within the gas conduction path 18, rather than in series.

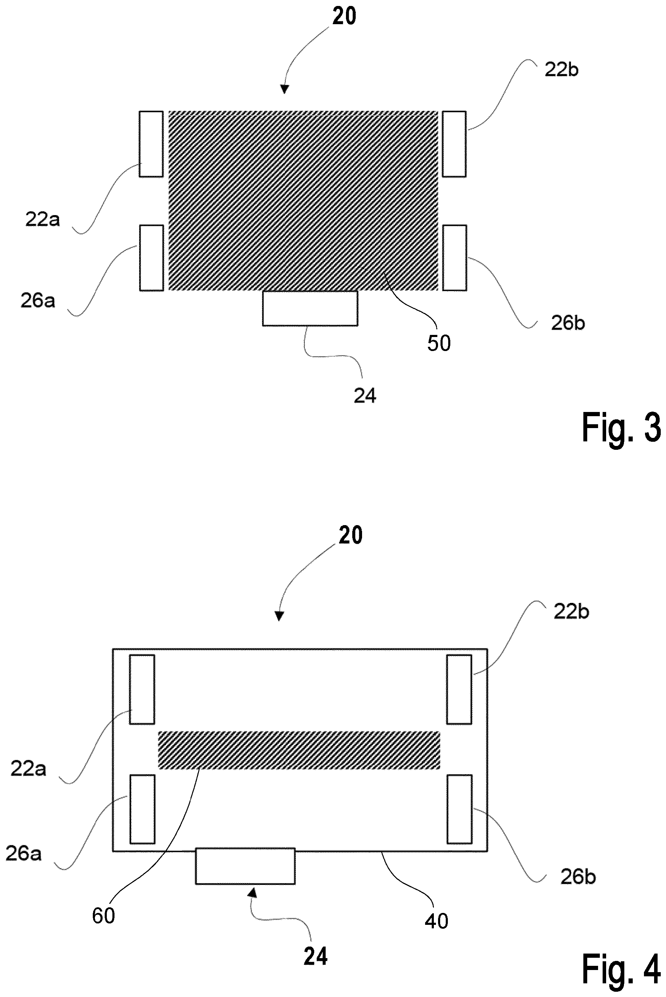

This is shown in Fig. 3, which shows a detail of the hydrogen gas detector of Fig. 2. In Fig. 3, the remaining arrangement of the hydrogen leak detector 10 with regard to the gas conduction path 18, the sniffing probe 12, the gas inlet 14 and/or the vacuum pump 16 may correspond to that of the embodiments in Figs. 1 and 2. As an alternative, the hydrogen gas detector 20 according to Fig. 3 and according to Fig. 4 may be a non-sniffing hydrogen gas detector, such as an open path detector comprising a measurement volume 50 in which the gas to be analyzed accumulates. On opposing sides of the measurement volume 50, a sound source 26a and a microphone 26b are arranged, as well as an IR source 22a and an IR sensor 22b, such that a sound signal emitted by the sound source 26a and an IR signal emitted by the IR source 22a travel through the measurement volume 50 and through gas contained therein, before being received by the microphone 26b and the IR sensor 22b, respectively, similarly as in Fig. 2 with regard to the measurement cuvette 40.

In Fig. 3, the first gas sensor 24 in the form of, for example, a metal hydride sensor, is arranged adjacent to the measurement volume 50 in a manner that gas within the measurement volume 50 contacts the first gas sensor 24. Accordingly, contact of gas within the measurement volume 50 with the first gas sensor 24 results in a measurement signal of the first gas sensor 24 being indicative of hydrogen, as the first gas sensor 24 is hydrogen-selective.

The embodiment according to Fig. 4 differs from that of Fig. 3 in that the IR source 22a and IR sensor 22b of the third gas sensor 22 and the sound source 26a and the microphone 26b of the second gas sensor 26 are arranged on respective opposing sides of a measurement cuvette 40 in a similar manner as in the embodiment according to Fig. 1. The measurement cuvette 40 comprises a longitudinal opening 60 covered by a gas-permeable membrane or filter, through which measurement gas enters the measurement cuvette 40 either directly from the ambient adjacent to the hydrogen gas conducting component or from a gas conduction path 18 (not shown in Fig. 4). The first gas sensor 24 is attached to the measurement cuvette 40 in a manner such that gas within the cuvette contacts the first gas sensor 24, resulting in a measurement signal of the first gas sensor 24. This measurement signal of the first gas sensor 24 is indicative of hydrogen if the gas within the cuvette 40 comprises hydrogen below a first threshold.

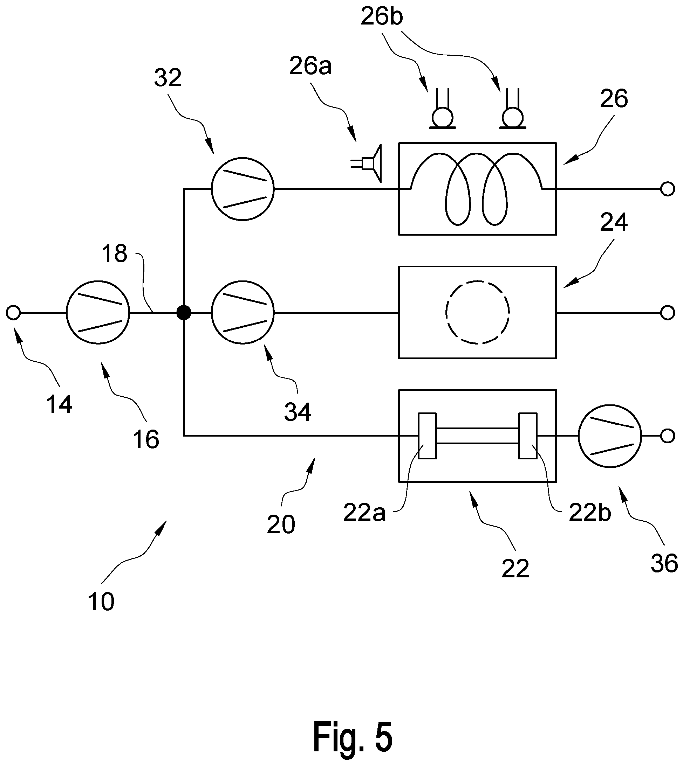

Fig. 5 shows an embodiment in which the first gas sensor 24, the second gas sensor 26 and the third gas sensor 22 are provided in parallel. A gas inlet 14 leads into a gas conduction path 18, which comprises a vacuum pump 16. The gas conduction path 18 splits up into three separate conduction paths, each of which comprises one of the three gas sensors 22, 24, 26. The upper gas conduction path in Fig. 5 comprises the second gas sensor together with a sample vacuum pump 32 upstream of the sensor 26. The second gas sensor 26 is a speed of sound sensor with a sound source 26a and two separate microphones 26b. The mid gas conduction path comprises the first gas sensor 24 and a separate sample vacuum pump 34 upstream of the first gas sensor 24. The first gas sensor 24 in the embodiment according to Fig. 5 may be a gas-FET-sensor.

The lower gas conduction path comprises the third gas sensor 22 and another sample vacuum pump 36 downstream of the sensor 22. The third gas sensor 22 of the embodiment in Fig. 5 is an NDIR sensor which is not sensitive to hydrogen and sensitive to methane and carbon-dioxide. Methane and carbon-dioxide are secondary gases of the second gas sensor 26, i.e. gases to which the second gas sensor 26 is sensitive.

## Claims

1. Hydrogen leak detector (10) for detecting leaks in hydrogen gas conducting components, comprising
a hydrogen gas detector (20) adapted to measure the concentration of hydrogen gas in the gas within a gas conduction path (18), said hydrogen gas detector (20) comprising:
a first gas sensor (24) being hydrogen selective and adapted to react to a first range of relatively low hydrogen concentrations below a first threshold, and
a second gas sensor (26) being hydrogen sensitive and non-selective to hydrogen, and sensitive to at least one further secondary gas different from hydrogen, and being adapted to react to a second range of relatively higher hydrogen concentrations above the first threshold,
wherein the hydrogen leak detector (10) is adapted to calibrate the second gas sensor (26) for low concentrations of hydrogen which are present in the ambient atmosphere of the hydrogen gas detector (20) and which do or do not originate from a leak in a hydrogen gas conducting component under test, by measuring the hydrogen concentration in a measured gas taken from the ambient atmosphere with the first gas sensor (24) and with the second gas sensor (26), and by assigning the measurement signal of the second gas sensor (26) of said measured gas to correspond to a concentration which does not originate from a leak in a hydrogen gas conducting component under test, if the measurement signal of the first sensor (24) of said measured gas indicates a hydrogen concentration below a predetermined value, and
wherein a hydrogen leak is considered as present in a hydrogen gas conducting component under test if the second gas sensor (26) indicates a hydrogen concentration above a second threshold.

2. Hydrogen leak detector (10) according to claim 1, wherein the second gas sensor (26) is used to measure hydrogen gas concentrations which result in saturation of the first gas sensor (24).

3. Hydrogen leak detector (10) according to claim 1 or 2, wherein the first gas sensor (24) is a metal hydride gate field-effect transistor (FET) gas sensor, a metal hydride Shottky diode gas sensor, or a selective metal oxide (MOS) gas sensor.

4. Hydrogen leak detector (10) according to one of the preceding claims, wherein a hydrogen leak is considered as present in a hydrogen gas conducting component under test if the first gas sensor (24) indicates a hydrogen concentration above a third threshold which is below said second threshold.

5. Hydrogen leak detector (10) according to one of the preceding claims, wherein the second gas sensor (26) is a speed of sound (SoS) gas sensor or a thermal conductivity (TC) gas sensor.

6. Hydrogen gas leak detector (10) according to one of the preceding claims, wherein the second gas sensor (26) comprises a measurement cuvette which can be filled with the gas to be measured, a sound source adapted to transmit sound signals through the gas within the cuvette, and at least one microphone adapted to receive the sound signals emitted by the sound source and transmitted through the cuvette.

7. Hydrogen leak detector (10) according to the preceding claim, wherein the second gas sensor (26) comprises at least two microphones adapted to receive the sound signals transmitted from the sound source through the cuvette, wherein the speed of said sound signals is calculated based on the time difference between receipt of the sound signals by the two microphones, and based on the distance between the two microphones.

8. Hydrogen leak detector (10) according to one of the preceding claims, comprising a third gas sensor (22) adapted to measure gas guided through the gas conduction path (18), said third gas sensor (22) being non-sensitive to hydrogen and sensitive to said at least one secondary gas to which the second gas sensor (26) is sensitive.

9. Hydrogen leak detector (10) according to the preceding claim, wherein the third gas sensor (22) comprises a radiation absorption cuvette which can be filled with the gas to be measured, a radiation source adapted to emit radiation of a known frequency band into the gas within the cuvette, and a radiation detector adapted to detect the radiation transmitted through the cuvette and to determine the absorption band of the detected radiation.

10. Hydrogen leak detector (10) according to the preceding claim, wherein the absorption cuvette of the third gas sensor (22) is employed as measurement cuvette for measuring the speed of sound by the second gas sensor (26).

11. Hydrogen leak detector (10) according to one of the preceding claims, wherein the hydrogen leak detector is a handheld detector.

12. Method for detecting leaks in hydrogen gas conducting components, wherein the concentration of hydrogen gas is measured in an area to be tested by
using a first gas sensor (24) being hydrogen selective and adapted to react to a first range of relatively low hydrogen concentrations below a first threshold for measuring said first range in the measured gas, and
using a second gas sensor (26) being hydrogen sensitive and non-selective to hydrogen, and sensitive to at least one further secondary gas different from hydrogen, and being adapted to react to a second range of relatively higher hydrogen concentrations above the first threshold, for measuring said second range in said measured gas,
comprising the following steps:
calibrating the second gas sensor (26) for low concentrations of hydrogen which are present in the ambient atmosphere of the hydrogen gas detector (20) and which do not originate from a leak in a hydrogen gas conducting component under test, by
measuring the hydrogen concentration in a measured gas taken from the ambient atmosphere with the first gas sensor (24) and with the second gas sensor (26), and
assigning the measurement signal of the second gas sensor (26) of said measured gas to correspond to a concentration which does not originate from a leak in a hydrogen gas conducting component under test, if the measurement signal of the first gas sensor (24) of said measured gas indicates a hydrogen concentration below a predetermined value,
considering a hydrogen leak to be present in the hydrogen gas conducting component if the hydrogen concentration determined by the second gas sensor (26) exceeds a second threshold.

13. Method according to the preceding claim, using a hydrogen leak detector (10) according to one of the preceding claims.

## Patentansprüche

1. Wasserstoffleckdetektor (10) zur Erkennung von Lecks in wasserstoffgasleitendenden Komponenten, der aufweist
einen Wasserstoffgasdetektor (20), der zum Messen der Konzentration von Wasserstoffgas in dem Gas innerhalb eines Gasleitungsweges (18) geeignet ist, wobei der Wasserstoffgasdetektor (20) aufweist:
einen ersten Gassensor (24), der wasserstoffselektiv ist und dazu geeignet ist, auf einen ersten Bereich von relativ niedrigen Wasserstoffkonzentrationen unterhalb eines ersten Schwellenwerts zu reagieren, und
einen zweiten Gassensor (26), der wasserstoffempfindlich und nicht wasserstoffselektiv ist und für mindestens ein weiteres, von Wasserstoff verschiedenes Sekundärgas empfindlich ist, und der dazu geeignet ist, auf einen zweiten Bereich von relativ höheren Wasserstoffkonzentrationen oberhalb des ersten Schwellenwerts zu reagieren,
wobei der Wasserstoffleckdetektor (10) dazu geeignet ist, den zweiten Gassensor (26) für niedrige Konzentrationen von Wasserstoff zu kalibrieren, die in der Umgebungsatmosphäre des Wasserstoffgasdetektors (20) vorhanden sind und aus einem Leck in einer zu prüfenden wasserstoffgasleitendenden Komponenten stammen oder nicht, indem die Wasserstoffkonzentration in einem gemessenen Gas, das aus der Umgebungsatmosphäre entnommen wird, mit dem ersten Gassensor (24) und mit dem zweiten Gassensor (26) gemessen wird, und indem das Messsignal des zweiten Gassensors (26) des gemessenen Gases so zugewiesen wird, dass es einer Konzentration entspricht, die nicht aus einem Leck in einer zu prüfenden wasserstoffgasleitenden Komponente stammt, wenn das Messsignal des ersten Sensors (24) des gemessenen Gases eine Wasserstoffkonzentration unterhalb eines vorbestimmten Werts angibt, und
wobei ein Wasserstoffleck als in einer zu prüfenden wasserstoffgasleitenden Komponente vorhanden gilt, wenn der zweite Gassensor (26) eine Wasserstoffkonzentration oberhalb eines zweiten Schwellenwerts angibt.

2. Wasserstoffleckdetektor (10) nach Anspruch 1, wobei der zweite Gassensor (26) zur Messung der Wasserstoffgaskonzentrationen verwendet wird, die zu einer Sättigung des ersten Gassensors (24) führen.

3. Wasserstoffleckdetektor (10) nach Anspruch 1 oder 2, wobei der erste Gassensor (24) ein Metall-Hybrid-Gate-Fieldeffekttransistor-(FET)-Gassensor, ein Metall-Hybrid-Shottky-Diode-Gassensor, oder ein selektiver Metalloxid-Gassensor ist.

4. Wasserstoffleckdetektor (10) nach einem der vorstehenden Ansprüche, wobei ein Wasserstoffleck als in einer zu prüfenden wasserstoffgasleitenden Komponenten vorhanden gilt, wenn der erste Gassensor (24) eine Wasserstoffkonzentration oberhalb eines dritten Schwellenwerts angibt, der unterhalb des zweiten Schwellenwerts liegt.

5. Wasserstoffleckdetektor (10) nach einem der vorstehenden Ansprüche, wobei der zweite Gassensor (26) ein Schallgeschwindigkeits-(SoS)-Gassensor oder ein Wärmeleitfähigkeits-(TC)-Gassensor ist.

6. Wasserstoffleckdetektor (10) nach einem der vorstehenden Ansprüche, wobei der zweite Gassensor (26) eine Messküvette, die mit dem zu messenden Gas gefüllt werden kann, eine Schallquelle, die zum Übertragen von Schallsignalen durch das Gas in der Küvette geeignet ist, und mindestens ein Mikrofon aufweist, das zum Empfangen der von der Schallquelle emittierten und durch die Küvette übertragenen Schallsignale geeignet ist.

7. Wasserstoffleckdetektor (10) nach einem der vorstehenden Ansprüche, wobei der zweite Gassensor (26) mindestens zwei Mikrofone aufweist, die zum Empfangen der von der Schallquelle über die Küvette übertragenen Schallsignale geeignet ist, wobei die Geschwindigkeit der Schallsignale basierend auf der Zeitdifferenz zwischen dem Empfang der Schallsignale durch die beiden Mikrofone und basierend auf dem Abstand zwischen den beiden Mikrofonen berechnet wird.

8. Wasserstoffleckdetektor (10) nach einem der vorstehenden Ansprüche, der einen dritten Gassensor (22) aufweist, der zum Messen von Gas geeignet ist, das durch den Gasleitungsweg (18) geführt wird, wobei der dritte Gassensor (22) nicht wasserstoffempfindlich ist und für mindestens ein Sekundärgas empfindlich ist, für welches der zweite Gassensor (26) empfindlich ist.

9. Wasserstoffleckdetektor (10) nach einem der vorstehenden Ansprüche, wobei der dritte Gassensor (22) eine Strahlungsabsorptionsküvette, die mit dem zu messenden Gas gefüllt werden kann, eine Strahlungsquelle, die zum Emittieren von Strahlen eines bekannten Frequenzbandes in das Gas in der Küvette geeignet ist, und einen Strahlungsdetektor aufweist, der zum Detektieren der durch die Küvette übertragenen Strahlung und zum Bestimmen des Absorptionsbandes der detektierten Strahlung geeignet ist.

10. Wasserstoffleckdetektor (10) nach einem der vorstehenden Ansprüche, wobei die Absorptionsküvette des dritten Gassensors (22) als Messküvette zum Messen der Schallgeschwindigkeit des zweiten Gassensors (26) eingesetzt wird.

11. Wasserstoffleckdetektor (10) nach einem der vorstehenden Ansprüche, wobei der Wasserstoffleckdetektor ein in der Hand gehaltener Detektor ist.

12. Verfahren zum Erkennen von Lecks in wasserstoffgasleitenden Komponenten, wobei die Konzentration der Wasserstoffgases in einem zu prüfenden Bereich gemessen wird, indem ein erster Gassensor (24) verwendet wird, der wasserstoffselektiv ist und dazu geeignet ist, auf einen ersten Bereich von relativ niedrigen Wasserstoffkonzentrationen unterhalb eines ersten Schwellenwerts zu reagieren, um den ersten Bereich in dem gemessenen Gas zu messen, und Verwenden eines zweiten Gassensors (26), der wasserstoffempfindlich und nicht wasserstoffselektiv ist und für mindestens ein weiteres, von Wasserstoff verschiedenes Sekundärgas empfindlich ist, und der dazu geeignet ist, auf einen zweiten Bereich einer relativ höheren Wasserstoffkonzentrationen oberhalb des ersten Schwellenwerts zu reagieren, um den zweiten Bereich in dem gemessenen Gas zu messen,
umfassend die folgenden Schritte:
Kalibrieren des zweiten Gassensors (26) für niedrige Konzentrationen von Wasserstoff, die in der Umgebungsatmosphäre des Wasserstoffgasdetektors (20) vorhanden sind und nicht aus einem Leck in einer zu prüfenden wasserstoffgasleitenden Komponente stammen, durch
Messen der Wasserstoffkonzentration in einem gemessenen Gas, das aus der Umgebungsatmosphäre entnommen wird, mit dem ersten Gassensor (24) und mit dem zweiten Gassensor (26), und
Zuweisen des Messsignals des zweiten Gassensors (26) des gemessenen Gases, so dass es einer Konzentration entspricht, die nicht aus einem Leck in einer zu prüfenden wasserstoffgasleitenden Komponente stammt, wenn das Messsignal des ersten Gassensors (24) des gemessenen Gases eine Wasserstoffkonzentration unterhalb eines vorbestimmten Werts angibt,
Feststellen des Vorhandenseins eines Wasserstofflecks in der wasserstoffgasleitenden Komponente, wenn die von dem zweiten Gassensor (26) bestimmte Wasserstoffkonzentration einen zweiten Schwellenwert überschreitet.

13. Verfahren nach dem vorstehenden Anspruch, das einen Wasserstoffleckdetektor (10) nach einem der vorstehenden Ansprüche verwendet.

## Revendications

1. Détecteur de fuites d'hydrogène (10) permettant de détecter les fuites dans les composants conducteurs d'hydrogène gazeux, comprenant :
un détecteur d'hydrogène gazeux (20) adapté pour mesurer la concentration d'hydrogène gazeux dans le gaz présent dans le circuit de conduction du gaz (18), ledit détecteur d'hydrogène gazeux (20) comprenant :
un premier capteur de gaz (24) sélectif à l'hydrogène et adapté pour réagir à une première gamme de concentrations d'hydrogène relativement faibles, inférieures à un premier seuil, et
un deuxième capteur de gaz (26) sensible à l'hydrogène et non sélectif à l'hydrogène, et sensible à au moins un autre gaz secondaire différent de l'hydrogène, et adapté pour réagir à une deuxième gamme de concentrations d'hydrogène relativement plus élevées, au-dessus du premier seuil,
où le détecteur de fuites d'hydrogène (10) est adapté pour étalonner le deuxième capteur de gaz (26) en fonction des faibles concentrations d'hydrogène présentes dans l'atmosphère ambiante du détecteur d'hydrogène gazeux (20) et qui proviennent ou non d'une fuite dans un composant conducteur d'hydrogène gazeux soumis à l'essai, en mesurant la concentration d'hydrogène dans un gaz mesuré prélevé dans l'atmosphère ambiante à l'aide du premier capteur de gaz (24) et du deuxième capteur de gaz (26), et en attribuant le signal de mesure du deuxième capteur de gaz (26) dudit gaz mesuré à une concentration qui ne provient pas d'une fuite dans un composant conducteur d'hydrogène gazeux soumis à l'essai, si le signal de mesure du premier capteur (24) dudit gaz mesuré indique une concentration d'hydrogène inférieure à une valeur prédéterminée, et
où une fuite d'hydrogène est considérée comme présente dans un composant conducteur d'hydrogène gazeux soumis à l'essai si le deuxième capteur de gaz (26) indique une concentration d'hydrogène supérieure à un deuxième seuil.

2. Détecteur de fuites d'hydrogène (10) selon la revendication 1, dans lequel le deuxième capteur de gaz (26) est utilisé pour mesurer les concentrations d'hydrogène gazeux qui entraînent la saturation du premier capteur de gaz (24).

3. Détecteur de fuites d'hydrogène (10) selon la revendication 1 ou 2, dans lequel le premier capteur de gaz (24) est un capteur de gaz à transistor à effet de champ (FET) à grille à hydrure métallique, un capteur de gaz à diode Shottky à hydrure métallique ou un capteur de gaz à oxyde métallique sélectif (MOS).

4. Détecteur de fuites d'hydrogène (10) selon l'une quelconque des revendications précédentes, où une fuite d'hydrogène est considérée comme présente dans un composant conducteur d'hydrogène gazeux soumis à l'essai si le premier capteur de gaz (24) indique une concentration d'hydrogène supérieure à un troisième seuil qui est inférieur audit deuxième seuil.

5. Détecteur de fuites d'hydrogène (10) selon l'une quelconque des revendications précédentes, dans lequel le deuxième capteur de gaz (26) est un capteur de gaz à vitesse du son (SoS) ou un capteur de gaz à conductivité thermique (TC).

6. Détecteur de fuites d'hydrogène gazeux (10) selon l'une quelconque des revendications précédentes, dans lequel le deuxième capteur de gaz (26) comprend une cuvette de mesure qui peut être remplie avec le gaz à mesurer, une source sonore adaptée pour transmettre des signaux sonores à travers le gaz à l'intérieur de la cuvette, et au moins un microphone adapté pour recevoir les signaux sonores émis par la source sonore et transmis à travers la cuvette.

7. Détecteur de fuites d'hydrogène (10) selon la revendication précédente, dans lequel le deuxième capteur de gaz (26) comprend au moins deux microphones adaptés pour recevoir les signaux sonores transmis par la source sonore à travers la cuvette, dans lequel la vitesse desdits signaux sonores est calculée sur la base de la différence de temps entre la réception des signaux sonores par les deux microphones, et sur la base de la distance entre les deux microphones.

8. Détecteur de fuites d'hydrogène (10) selon l'une quelconque des revendications précédentes, comprenant un troisième capteur de gaz (22) adapté pour mesurer le gaz guidé à travers le circuit de conduction de gaz (18), ledit troisième capteur de gaz (22) étant non sensible à l'hydrogène et sensible audit au moins un gaz secondaire auquel le deuxième capteur de gaz (26) est sensible.

9. Détecteur de fuites d'hydrogène (10) selon la revendication précédente, dans lequel le troisième capteur de gaz (22) comprend une cuvette d'absorption de rayonnement qui peut être remplie avec le gaz à mesurer, une source de rayonnement adaptée pour émettre un rayonnement d'une bande de fréquence connue dans le gaz à l'intérieur de la cuvette, et un détecteur de rayonnement adapté pour détecter le rayonnement transmis à travers la cuvette et pour déterminer la bande d'absorption du rayonnement détecté.

10. Détecteur de fuites d'hydrogène (10) selon la revendication précédente, dans lequel la cuvette d'absorption du troisième capteur de gaz (22) est employée comme cuvette de mesure pour mesurer la vitesse du son à l'aide du deuxième capteur de gaz (26).

11. Détecteur de fuites d'hydrogène (10) selon l'une quelconque des revendications précédentes, ledit détecteur de fuites d'hydrogène étant un détecteur portatif.

12. Procédé de détection des fuites dans les composants conducteurs d'hydrogène gazeux, dans lequel la concentration d'hydrogène gazeux est mesurée dans une zone à tester
à l'aide d'un premier capteur de gaz (24) sélectif à l'hydrogène et adapté pour réagir à une première gamme de concentrations d'hydrogène relativement faibles, inférieures à un premier seuil pour mesurer ladite première gamme dans le gaz mesuré, et
à l'aide d'un deuxième capteur de gaz (26) sensible à l'hydrogène et non sélectif à l'hydrogène, et sensible à au moins un autre gaz secondaire différent de l'hydrogène, et adapté pour réagir à une deuxième gamme de concentrations d'hydrogène relativement plus élevées, au-dessus du premier seuil, pour mesurer ladite deuxième gamme dans ledit gaz mesuré,
comprenant les étapes suivantes :
étalonner le deuxième capteur de gaz (26) en fonction des faibles concentrations d'hydrogène présentes dans l'atmosphère ambiante du détecteur d'hydrogène gazeux (20) et qui ne proviennent pas d'une fuite dans un composant conducteur d'hydrogène gazeux soumis à l'essai,
en mesurant la concentration d'hydrogène dans un gaz mesuré prélevé dans l'atmosphère ambiante à l'aide du premier capteur de gaz (24) et du deuxième capteur de gaz (26), et
en attribuant le signal de mesure du deuxième capteur de gaz (26) dudit gaz mesuré à une concentration qui ne provient pas d'une fuite dans un composant conducteur d'hydrogène gazeux soumis à l'essai, si le signal de mesure du premier capteur de gaz (24) dudit gaz mesuré indique une concentration d'hydrogène inférieure à une valeur prédéterminée,
considérer qu'une fuite d'hydrogène est présente dans le composant conducteur d'hydrogène gazeux si la concentration d'hydrogène déterminée par le deuxième capteur de gaz (26) dépasse un deuxième seuil.

13. Procédé selon la revendication précédente, utilisant un détecteur de fuites d'hydrogène (10) selon l'une quelconque des revendications précédentes.
